# EUROPEAN PATENT SPECIFICATION

(11) **EP 2 809 456 B1**
(45) Date of publication and mention of the grant of the patent: **11.10.2017**
(21) Application number: 13705114.0
(22) Date of filing: 31.01.2013
(51) Int. Cl.: B08B 9/032, G01M 99/00, G08B 21/18

(54) **A LIQUID PROCESSING SYSTEM WITH SECONDARY SUB-SYSTEMS FOR REDUCING PRODUCT LOSSES AND WATER CONSUMPTION**
FLÜSSIGKEITSBEHANDLUNGSSYSTEM MIT SEKUNDÄREN UNTERSYSTEMEN ZUR REDUZIERUNG VON PRODUKTVERLUSTEN UND WASSERVERBRAUCH
SYSTÈME DE TRAITEMENT DE LIQUIDE DOTÉ DE SOUS-SYSTÈMES SECONDAIRES PERMETTANT DE RÉDUIRE LES PERTES DE PRODUIT ET LA CONSOMMATION D'EAU

(30) Priority: 03.02.2012 SE 1250080
(43) Date of publication of application: 10.12.2014
(73) Proprietor: Tetra Laval Holdings & Finance SA, 1009 Pully (CH)
(72) Inventor: FRANZ, Ferdinand, S-226 55 Lund (SE); LUEDTKE, Pontus, S-246 51 Löddeköpinge (SE)
(74) Representative: Tetra Pak - Patent Attorneys SE
(86) International application number: PCT/EP2013/051861
(87) International publication number: WO 2013/113793

(56) References cited:
- WO-A1-02/101335
- FR-A1- 2 941 977
- US-A1- 2001 035 198

## Description

### Technical Field

The invention generally relates to the field of liquid processing. More particularly, the invention relates to a liquid processing system having a number of secondary sub-systems connected to sub-systems of said liquid processing system respectively such that product losses and water consumption can be followed and forecasted accurately.

Related prior art is described in Documents FR-A-2941977 and US2001 /035198A1.

### Background of the invention

A liquid processing line comprises a number of machine units arranged after each other. For example, a dairy processing line can comprise e.g. a separator for separating more dense particles, such as dirt, from the milk, a heat exchanger for reducing the amount of unwanted microorganisms by heating the milk and a homogenizer for making the fat in the milk evenly spread.

When switching from one product to another, when initiating a cleaning process or in any other way stopping the product processing it is important to make sure that as much as possible of the product in the line is captured. Therefore, when stopping product processing it is common to flush the system with clean water. When the clean water is mixed with the product a so-called mix phase is formed. As long as the product content in this mix phase is above a certain threshold value the product is fed back into the line, and when below the threshold value the mix phase is sent out to the drain.

Therefore, in order to reduce the product loss and the water consumption the mix phase should be as well defined as possible, i.e. the time from full product concentration to only water should be as short as possible. In order to achieve this different kinds of technologies have been presented. For instance, it has been suggested to use an ice and water mixture to separate the product from the water, often referred to as ice pigging. Moreover, it has been suggested to use a mechanical element, such as a rubber ball, for keeping the product apart from the water. Yet another proposed technology is to use air to blow out the product before flushing with water.

In some cases, for instance when switching from processing milk to processing chocolate milk, the chocolate milk may be used for purging the milk out of the processing line. The reason why this is possible is because the chocolate milk is not spoiled if there are residues of milk in the processing line. Therefore, the same technologies presented above for keeping the product and the water apart can be used for keeping two products apart as well.

To sum up, stopping a processing line causes product losses as well as substantial water consumption. Different technologies have been developed for reducing these drawbacks. However, the problem still remains and implies high costs for processing products at the same time as product losses and water consumption have a substantial negative environmental impact.

### Summary

The inventors have realized that the liquid processing system can be divided into a number of sub-systems and to have corresponding secondary sub-systems connected to these sub-systems respectively and to measure product losses and/or water consumption for each of these. The benefit of this approach is that each secondary sub-system may be optimized individually and that sub-systems having extensive water consumption and product losses may be identified. A further advantage with this approach is that it is easier to make reliable models and hence to forecast the water consumption and product losses.

For example, in a case where the secondary sub-systems are cleaning in place (CIP) sub-systems it is possible to calculate the amount of product losses and water consumption with improved accuracy before a food processing system is set up. Further, when the food processing system is set up it is possible to validate the amount of product losses and water consumption with improved accuracy. Hence, this modularized approach provides for less product losses and reduced water consumption, in turn resulting in reduced total cost of ownership, but also making it possible to be able to predict the product losses and water consumption for a food processing system to be set up with high accuracy compared to a food processing system not using this modular approach.

The wording "liquid processing system" should be given a broad interpretation in this context. The liquid processing system could be a complete production line comprising different pieces of equipment together forming a system from raw material intake to package filling. However, the liquid processing system could also be understood as a single piece of equipment, e.g. a heat exchanger. The reason for dividing a single piece of equipment into a number of sub-systems may be that one part requires extensive cleaning and another part requires less extensive cleaning.

Further, the wording "sub-system" should be interpreted broadly as a section of the system. Two sub-system may have overlapping parts. For instance, a section needing extensive cleaning may be part of two sub-system such that this section may be cleaned more often than other sections not being overlapped by two sub-systems.

According to a first aspect a liquid processing system is provided. The liquid processing system comprises a number of sub-systems handling a liquid product, said liquid product being transferred between said sub-systems during processing of said liquid product. The liquid processing system further comprises a number of secondary sub-systems connectable to said sub-systems respectively, each secondary sub-system having an associated measuring device, such that product losses or water consumption, caused by at least one secondary sub-system being connected to a corresponding sub-system of the liquid processing system, can be measured for each secondary sub-system individually.

According to a further aspect a liquid processing system is provided. The liquid processing system comprises a number of sub-systems handling a liquid product in a consecutive order, said liquid product being transferred between said sub-systems via pipes, wherein a number of secondary sub-systems are connected to said sub-systems respectively, each secondary sub-system having an associated measuring device, such that product losses or water consumption can be measured for each secondary sub-system individually.

Each secondary sub-system may comprise one inlet and one outlet.

Further, the liquid processing system may comprise a control device arranged to control at least one of said secondary sub-systems such that product losses and water consumption can be minimized for said at least one of said secondary sub-systems.

The liquid processing system may comprise a database comprising reference data for water consumption and product losses for at least one of said number of secondary sub-systems such that a notification can be sent if actual data differ from said reference data.

The liquid processing system may comprise a database comprising historical data for water consumption and product losses for at least one of said number of secondary sub-systems such that a notification can be sent if actual data differ from said historical data.

The secondary sub-systems may be cleaning-in-place (CIP) sub-systems. If so, the CIP sub-systems may comprise a monitoring device arranged to capture a cleaning parameter and to forward said cleaning parameter to said control device. Cleaning parameters may in this context be e.g. cleaning time for different steps in the cleaning process, temperature, which cleaning agents that are used and flow speed for the different steps of the cleaning process.

In case the secondary sub-systems are CIP sub-systems, the cleaning time may be set for each CIP sub-system individually.

Further, also in case the secondary sub-systems are CIP sub-systems, each CIP sub-system may be configured to clean its corresponding sub-system by, in a first step, flush said sub-system with clean water, in a second step, pump a cleaning solution comprising cleaning agents through said sub-system, and, in a third step, flush said sub-system with clean water such that cleaning agents are removed, wherein a decision to switch from said first step to said second step is taken for each CIP sub-system individually.

Further, also in case the secondary sub-systems are CIP sub-systems, each CIP sub-system may be configured to clean its corresponding sub-system by, in a first step, flush said sub-system with clean water, in a second step, pump a cleaning solution comprising cleaning agents through said sub-system, and, in a third step, flush said sub-system with clean water such that cleaning agents are removed, wherein a decision to switch from said second step to said third step is taken for each CIP sub-system individually.

According to a yet further aspect, it is provided a method for detecting inefficiencies in a liquid processing system, said liquid processing system comprises a number of secondary sub-systems connected to said sub-systems respectively, each secondary sub-system having an associated measuring device. The method comprises measuring product losses or water consumption for a secondary sub-system using said measuring device, and comparing said product losses or water consumption to reference data.

The method may further comprise sending an alert if said product losses or water consumption differ from said reference data.

Moreover, the method may comprise comparing said product losses or water consumption to historical data, and sending an alert if said product losses or water consumption differ from said historical data.

In a case where the sub-systems are CIP sub-systems, the method may further comprise capturing a cleaning parameter for at least one of said CIP sub-systems, and changing settings for said at least one CIP sub-system based on said cleaning parameter such that product losses and water consumption can be minimized.

Further, in a case in which the sub-systems are CIP sub-systems, the CIP sub-system may be configured to clean its corresponding sub-system by, in a first step, flush said sub-system with clean water, in a second step, pump a cleaning solution comprising cleaning agents through said sub-system, and, in a third step, flush said sub-system with clean water such that cleaning agents are removed, wherein a decision to switch from said first step to said second step is taken for said CIP sub-system individually.

Moreover, in a case in which the sub-systems are CIP sub-systems, the CIP sub-system is configured to clean its corresponding sub-system by, in a first step, flush said sub-system with clean water, in a second step, pump a cleaning solution comprising cleaning agents through said sub-system, and, in a third step, flush said sub-system with clean water such that cleaning agents are removed, wherein a decision to switch from said second step to said third step is taken for said CIP sub-system individually.

According to an additional aspect, a method for detecting inefficiencies in a liquid processing system is provided. The liquid processing system comprises a number of secondary sub-systems connectable to sub-systems of said liquid processing system, each secondary sub-system having an associated measuring device, whereby the method comprises the steps of measuring product losses or water consumption for a secondary sub-system, caused by at least one secondary sub-system being connected to a corresponding sub-system of the liquid processing system, using said measuring device, and comparing said product losses or water consumption to reference data.

### Brief description of the drawings

The above, as well as additional objects, features and advantages of the present invention, will be better understood through the following illustrative and non-limiting detailed description of preferred embodiments of the present invention, with reference to the appended drawings, wherein:
Fig 1 a generally illustrates a food processing line in production state.
Fig 1b generally illustrates the food processing line in cleaning state.
Fig 2a generally illustrates a first embodiment of a food processing line having secondary sub-systems in a production state.
Fig 2b generally illustrates the first embodiment of the food processing line having secondary sub-systems in a cleaning state.
Fig 3a generally illustrates a second embodiment of a food processing line having secondary sub-systems in a production state.
Fig 3b generally illustrates the second embodiment of the food processing line having secondary sub-systems in a cleaning state.
Fig 4 generally illustrates a food processing system having a reception and a storage.
Fig 5 generally illustrates a production cycle.

### Detailed description of preferred embodiments

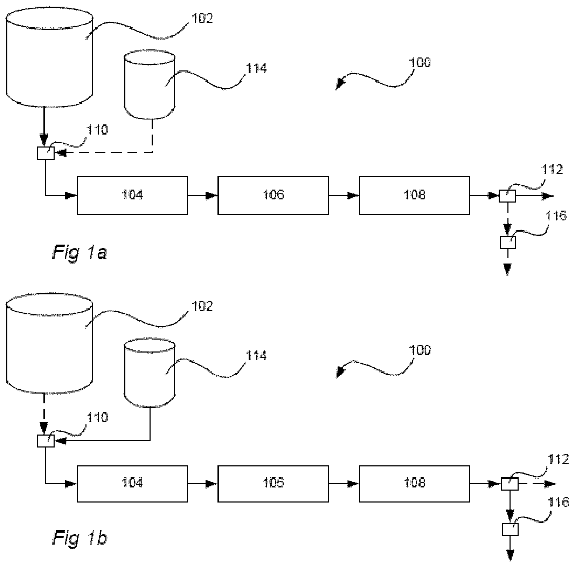

Fig 1 a and 1b illustrate a general example of a food processing system 100 of today. Food product held in a tank 102 can be processed in three processing steps performed in three different pieces of equipment - a first unit 104, a second unit 106, a third unit 108, e.g. a separator, a heat exchanger, a homogeniser or other food processing equipment in different configurations.

During a production state, illustrated in fig 1a, a first valve 110 is set to allow food product to flow from the tank 102 to the first unit 104. Similarly, a second valve 112 is set to allow processed food product to flow from the third unit 108 to, for instance, a packaging machine, herein not illustrated.

During a cleaning state, illustrated in fig 1b, the first valve 110 is set to allow water or cleaning solution held in a CIP tank 114 to flow from the CIP tank 114 to the first unit 104. The second valve 112 is set to allow water or cleaning solution having flown through the first unit 104, the second unit 106 and the third unit 108 to a drain or a recycling system via a measuring device 116. Further, although not illustrated, the water or cleaning solution may be circulated in the food processing system.

As is well known today, a cleaning cycle comprises three main steps - a first step in which water is flushed through the system in order to capture the remaining product, a second step in which a cleaning solution is pumped through the food processing system in order to remove deposits, such as fouling, pulp or fibres, and a third step in which water is flushed through the food processing system in order to remove the cleaning solution. In this simplified example, for illustrative purposes, only one CIP tank 114 is depicted.

During the first step when water is flushed through the food processing system the amount of food product in a mixing phase, comprising water and the remaining product, is determined by means of the measuring device 116. As long as the amount of food product is above a threshold value the mixing phase is fed back into the food procesing system in order to reduce the product losses. However, for illustrative purposes, a feed back loop is not illustrated.

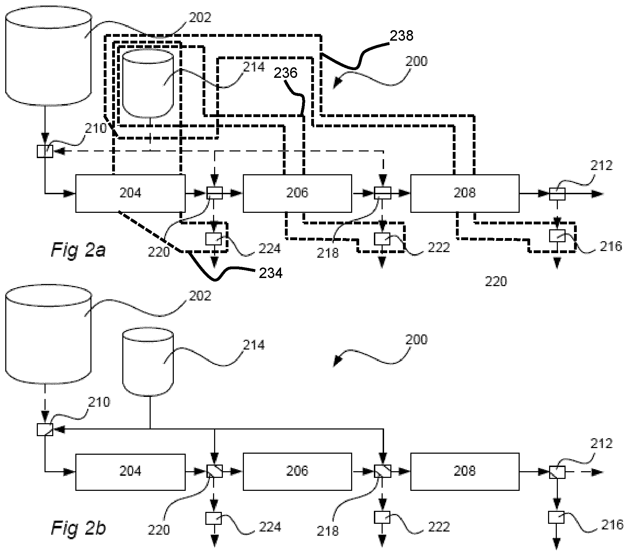

Fig 2a and fig 2b illustrate a general food processing system having a number of sub-systems and corresponding CIP sub-systems. Fig 2a illustrates the general food processing system in a production state and fig 2b illustrates the food processing system in a cleaning state.

As in fig 1, the food processing system 200 can comprise a tank 202, a first liquid processing unit 204, a second liquid processing unit 206, a third liquid processing unit 208, a first valve 210, a second valve 212, a CIP tank 214 and a first measuring device 216. However, unlike the food processing system and the corresponding CIP system as of today illustrated in fig 1, a third valve 218 can be placed between the second unit 206 and the third unit 208, and a fourth valve 220 can be placed between the first unit 204 and the second unit 206.

By having the extra valves, the third valve 218 and the fourth valve 220, the food processing system 200 may be divided in three sub-systems such that the first unit 204, the second unit 206 and the third unit 208 may be cleaned individually. Although not illustrated, feed back loops may be used in order to make it possible to circulate the water or cleaning solution. Hence, each one of the units 204, 206, 208 forms a unique sub-system of the food processing system 200, either alone or together with the associated pipes and valves 212, 218, 220.

A second measuring device 222 can be introduced in order to be able to measure the amount of food product in the mixing phase from the water being flushed through the second unit 206. Similarly, a third measuring device 224 can be introduced in order to be able to measure the amount of food product in the mixing phase from the water being flushed through the first unit 204. Thus, by dividing the food processing system 200 into, in this particular example, three sub-systems 204, 206, 208 and by measuring for each of the sub-systems it is possible to adapt the cleaning for each sub-system individually. For this particular embodiment, cleaning is accomplished by means of the CIP system. The CIP system is formed by three corresponding secondary sub-systems 234, 236, 238, wherein each secondary sub-system includes at least the tank 214 and one of the measuring devices 216, 222, 224. Optionally, each secondary sub-system may also include a corresponding valve 212, 220, 218, whereby a secondary sub-system may infact also include parts already included in the sub-systems of the processing system 200.

For each of the measuring devices 216, 222, 224, apart from measuring the amount of product in the mixing phase, water consumption can be measured. In this way both product losses and water consumption can be determined and communicated to an operator. In this example, the measuring devices 216, 222, 224 have been illustrated as single measuring devices, but another option is to have a number of measuring devices to measure water consumption and product losses.

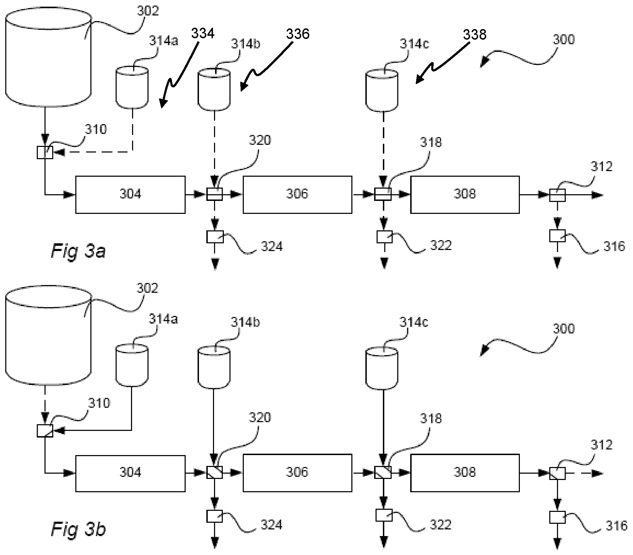

Fig 3a and fig 3b illustrate yet another food processing system. Fig 3a illustrates a production state and fig 3b illustrates a cleaning state. As fig 2a and fig 2b, the food processing system 300 comprises a tank 302, a first liquid processing unit 304, a second liquid processing unit 306, a third liquid processing unit 308, a first valve 310, a second valve 312, a first measuring device 316, a second valve 318, a third valve 320, a second measuring device 322 and a third measuring device 324. However, unlike the food processing system illustrated in fig 2a and fig 2b, the food processing system 300 comprises a first CIP tank 314a connected to the first valve 310 such that the first unit 304 may be cleaned using the water or cleaning solution from this first CIP tank 314a. Similarly, a second tank 314b may be used for cleaning of the second unit 306 and a third tank 314c may be used for cleaning the third unit 308.

An advantage of having different cleaning solutions for different sub-systems of the food processing system 300 is that different cleaning solutions can be chosen for different sub-systems resulting in, e.g. that high concentration is only needed for sub-systems requiring extensive cleaning. This is positive both from cost perspective as well as environmental perspective.

The processing system in fig 3a and 3b thus differs slightly from what has been described with reference to fig 2a and 2b, as each one of the secondary sub-systems 334, 336, 338 has its own tank 313a, 314b, 314c in combination with the associated downstream measuring device 324, 322, 316.

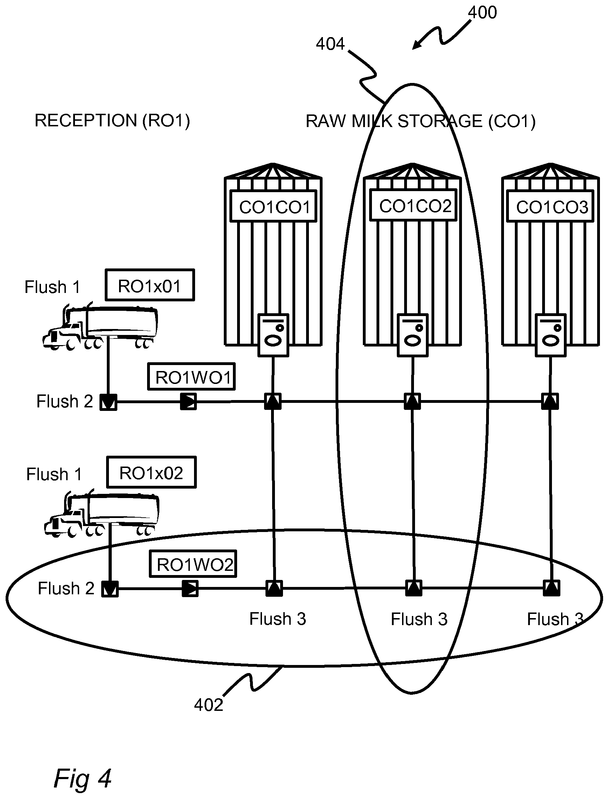

Fig 4 illustrates a food processing system 400 comprising a reception in which food product is received and a storage in which the received food product is stored. Due to that there are two reception stations and three storage tanks a first sub system 402 associated to one of the reception stations may be cleaned even though the other reception stations is being used. Further, in a similar way a second sub-system 404, related to one of the storage tanks, may be cleaned at the same time as food product is fed into one of the other storage tanks.

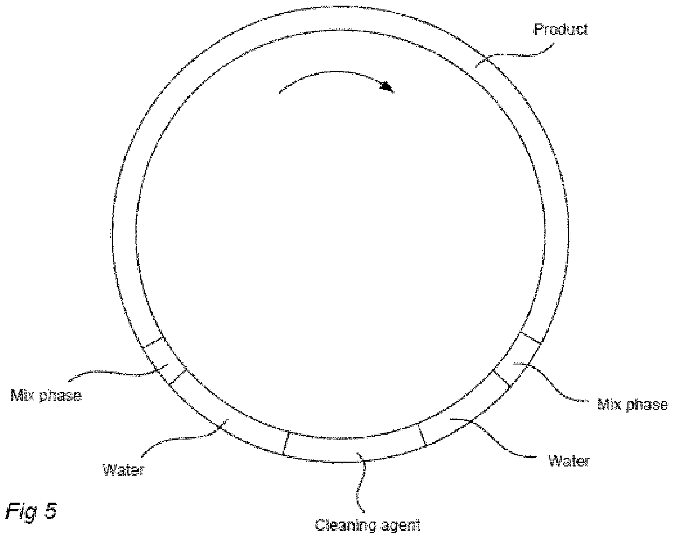

In fig 5 a production cycle is illustrated. Generally, the production cycle comprises two main phases, a cleaning phase and a production phase. When switching from production phase to cleaning phase water is added. The water is mixed with the product present in the system thereby forming a mixture of product and water, often referred to as a mix phase. In order to reduce the product loss, the amount of product in the mix phase may be determined and as long as the amount is above a threshold value it is returned to the system. Optionally, if the amount of water is considered as being too high, the mix phase may be filtered before being returned to the system.

When the amount of product is below a certain level and no product is captured water is used to flush the system. After having flushed the system, cleaning agents are added, e.g. lye and acid. The step of using cleaning agent may be divided in several sup-steps, e.g. one sub-step for lye and another for acid. In order to remove residues of the cleaning agents water is flushed through the system. After having removed all residues of cleaning agents product is sent into the system. During a transitional phase there will be a mixture of water and product also referred to a mix phase.

Although the examples related to food processing have been presented the same principles may apply to any other field of liquid processing , such as cosmetics, pharmaceutical processing or brewery.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A liquid processing system comprising
a number of sub-systems (204, 206, 208, 304, 306, 308) handling a liquid product, said liquid product being transferred between said sub-systems (204, 206, 208, 304, 306, 308) during processing of said liquid product,
**characterized by**
a number of secondary sub-systems (234, 236, 238, 334, 336, 338) connectable to said sub-systems (204, 206, 208, 304, 306, 308) respectively, each secondary sub-system (234, 236, 238, 334, 336, 338) having an associated measuring device (216, 222, 224, 316, 322, 324), such that product losses or water consumption, caused by at least one secondary sub-system (234, 236, 238, 334, 336, 338) being connected to a corresponding sub-system (216, 222, 224, 316, 322, 324) of the liquid processing system (200), can be measured for each secondary sub-system (234, 236, 238, 334, 336, 338) individually.

2. The liquid processing system according to claim 1, wherein said number of sub-systems (216, 222, 224, 316, 322, 324) are handling the liquid product in a consecutive order, and wherein said number of secondary sub-systems (234, 236, 238, 334, 336, 338) are connected to said sub-systems (216, 222, 224, 316, 322, 324).

3. The liquid processing system according to claim 1 or 2, wherein each secondary sub-system (234, 236, 238, 334, 336, 338) comprises one inlet and one outlet.

4. The liquid processing system according to any one of the preceding claims, further comprising
a control device arranged to control at least one of said secondary sub-systems (234, 236, 238, 334, 336, 338) such that product losses and water consumption can be minimized for said at least one of said secondary sub-systems (234, 236, 238, 334, 336, 338).

5. The liquid processing system according to any one of the preceding claims, further comprising
a database comprising reference data for water consumption and product losses for at least one of said number of secondary sub-systems (234, 236, 238, 334, 336, 338) such that a notification can be sent if actual data differ from said reference data.

6. The liquid processing system according to any one of the preceding claims, further comprising
a database comprising historical data for water consumption and product losses for at least one of said number of secondary sub-systems (234, 236, 238, 334, 336, 338) such that a notification can be sent if actual data differ from said historical data.

7. The liquid processing system according to claim 4, wherein said secondary sub-systems (234, 236, 238, 334, 336, 338) are cleaning-in-place (CIP) sub-systems, further comprising
a monitoring device arranged to capture a cleaning parameter and to forward said cleaning parameter to said control device.

8. The liquid processing system according to any one of the preceding claims, wherein said secondary sub-systems (234, 236, 238, 334, 336, 338) are cleaning-in-place (CIP) sub-systems, wherein cleaning time is set for each CIP sub-system individually.

9. The liquid processing system according to any one of the preceding claims, wherein said secondary sub-systems (234, 236, 238, 334, 336, 338) are cleaning-in-place (CIP) sub-systems, wherein each CIP sub-system is configured to clean its corresponding sub-system (216, 222, 224, 316, 322, 324) by, in a first step, flush said sub-system (216, 222, 224, 316, 322, 324) with clean water, in a second step, pump a cleaning solution comprising cleaning agents through said sub-system (216, 222, 224, 316, 322, 324), and, in a third step, flush said sub-system (216, 222, 224, 316, 322, 324) with clean water such that cleaning agents are removed, wherein a decision to switch from said first step to said second step is taken for each CIP sub-system (234, 236, 238, 334, 336, 338) individually.

10. The liquid processing system according to any one of the preceding claims, wherein said secondary sub-systems (234, 236, 238, 334, 336, 338) are cleaning-in-place (CIP) sub-systems, wherein each CIP sub-system is configured to clean its corresponding sub-system (216, 222, 224, 316, 322, 324) by, in a first step, flush said sub-system (216, 222, 224, 316, 322, 324) with clean water, in a second step, pump a cleaning solution comprising cleaning agents through said sub-system (216, 222, 224, 316, 322, 324), and, in a third step, flush said sub-system (216, 222, 224, 316, 322, 324) with clean water such that cleaning agents are removed, wherein a decision to switch from said second step to said third step is taken for each CIP sub-system (234, 236, 238, 334, 336, 338) individually.

11. A method for detecting inefficiencies in a liquid processing system, said liquid processing system comprises a number of secondary sub-systems (234, 236, 238, 334, 336, 338) connectable to sub-systems (216, 222, 224, 316, 322, 324) of said liquid processing system, each secondary sub-system (234, 236, 238, 334, 336, 338) having an associated measuring device,
said method comprising
measuring product losses or water consumption for a secondary sub-system (234, 236, 238, 334, 336, 338), caused by at least one secondary sub-system (234, 236, 238, 334, 336, 338) being connected to a corresponding sub-system (216, 222, 224, 316, 322, 324) of the liquid processing system (200), using said measuring device, and
comparing said product losses or water consumption to reference data.

12. The method according to claim 11, further comprising
sending an alert if said product losses or water consumption differ from said reference data.

13. The method according to any one of the claims 11 or 12, further comprising
comparing said product losses or water consumption to historical data, and
sending an alert if said product losses or water consumption differ from said historical data.

14. The method according to any one of the claims 11 to 13, wherein said secondary sub-systems (234, 236, 238, 334, 336, 338) are CIP sub-systems, further comprising
capturing a cleaning parameter for at least one of said CIP sub-systems (234, 236, 238, 334, 336, 338), and
changing settings for said at least one of said CIP sub-system (234, 236, 238, 334, 336, 338) based on said cleaning parameter such that product losses and water consumption can be minimized.

15. The method according to any one of the claims 11 to 14, wherein said secondary sub-systems (234, 236, 238, 334, 336, 338) are CIP sub-systems, wherein said CIP sub-system (234, 236, 238, 334, 336, 338) is configured to clean its corresponding sub-system (216, 222, 224, 316, 322, 324) by, in a first step, flush said sub-system (216, 222, 224, 316, 322, 324) with clean water, in a second step, pump a cleaning solution comprising cleaning agents through said sub-system (216, 222, 224, 316, 322, 324), and, in a third step, flush said sub-system (216, 222, 224, 316, 322, 324) with clean water such that cleaning agents are removed, wherein a decision to switch from said first step to said second step is taken for said CIP sub-system (234, 236, 238, 334, 336, 338) individually.

16. The method according to any one of the claims 11 to 15, wherein said secondary sub-systems (234, 236, 238, 334, 336, 338) are CIP sub-systems, wherein said CIP sub-system (234, 236, 238, 334, 336, 338) is configured to clean its corresponding sub-system (216, 222, 224, 316, 322, 324) by, in a first step, flush said sub-system (216, 222, 224, 316, 322, 324) with clean water, in a second step, pump a cleaning solution comprising cleaning agents through said sub-system (216, 222, 224, 316, 322, 324), and, in a third step, flush said sub-system (216, 222, 224, 316, 322, 324) with clean water such that cleaning agents are removed, wherein a decision to switch from said second step to said third step is taken for said CIP sub-system (234, 236, 238, 334, 336, 338) individually.

## Patentansprüche

1. Flüssigkeitsbehandlungssystem, umfassend:
eine Anzahl von Untersystemen (204, 206, 208, 304, 306, 308), die ein flüssiges Produkt behandelt, wobei das flüssige Produkt zwischen den Untersystemen (204, 206, 208, 304, 306, 308) während der Verarbeitung des flüssigen Produkts übertragen wird,
**dadurch gekennzeichnet, dass**
eine Anzahl sekundärer Untersysteme (234, 236, 238, 334, 336, 338), die jeweils mit den Untersystemen (204, 206, 208, 304, 306, 308) verbunden werden kann, wobei jedes sekundäre Untersystem (234, 236, 238, 334, 336, 338) eine zugehörige Messvorrichtung (216, 222, 224, 316, 322, 324) aufweist, sodass Produktverluste und Wasserverbrauch, die durch mindestens ein sekundäres Untersystem (234, 236, 238, 334, 336, 338), das mit einem entsprechenden Untersystem (216, 222, 224, 316, 322, 324) des Flüssigkeitsbehandlungssystems (200) verbunden ist, verursacht werden, für jedes sekundäre Untersystem (234, 236, 238, 334, 336, 338) einzeln gemessen werden können.

2. Flüssigkeitsbehandlungssystem nach Anspruch 1, wobei die Anzahl von Untersystemen (216, 222, 224, 316, 322, 324) das flüssige Produkt in einer Reihenfolge behandelt, und wobei die Anzahl sekundärer Untersysteme (234, 236, 238, 334, 336, 338) mit den Untersystemen (216, 222, 224, 316, 322, 324) verbunden ist.

3. Flüssigkeitsbehandlungssystem nach Anspruch 1 oder 2, wobei jedes sekundäre Untersystem (234, 236, 238, 334, 336, 338) einen Einlass und einen Auslass umfasst.

4. Flüssigkeitsbehandlungssystem nach einem der vorhergehenden Ansprüche, ferner umfassend eine Steuervorrichtung, die zum Steuern mindestens eines der sekundären Untersysteme (234, 236, 238, 334, 336, 338) angeordnet ist, sodass Produktverluste und Wasserverbrauch für das mindestens eine der sekundären Untersysteme (234, 236, 238, 334, 336, 338) minimiert werden können.

5. Flüssigkeitsbehandlungssystem nach einem der vorhergehenden Ansprüche, ferner umfassend eine Datenbank, die Referenzdaten für Wasserverbrauch und Produktverluste für mindestens eines der Anzahl von sekundären Untersysteme (234, 236, 238, 334, 336, 338) umfasst, sodass eine Nachricht gesendet werden kann, wenn die derzeitigen Daten von den Referenzdaten abweichen.

6. Flüssigkeitsbehandlungssystem nach einem der vorhergehenden Ansprüche, ferner umfassend eine Datenbank, die Verlaufsdaten für Wasserverbrauch und Produktverluste für mindestens eines der Anzahl von sekundären Untersystemen (234, 236, 238, 334, 336, 338) umfasst, sodass eine Nachricht gesendet werden kann, wenn die derzeitigen Daten von den Verlaufsdaten abweichen.

7. Flüssigkeitsbehandlungssystem nach Anspruch 4, wobei die sekundären Untersysteme (234, 236, 238, 334, 336, 338) Untersysteme zur Vor-Ort-Reinigung (CIP) sind, die ferner eine Überwachungsvorrichtung umfassen, die zum Erfassen eines Reinigungsparameters und zum Weiterleiten des Reinigungsparameters zur Steuervorrichtung angeordnet sind.

8. Flüssigkeitsbehandlungssystem nach einem der vorhergehenden Ansprüche, wobei die sekundären Untersysteme (234, 236, 238, 334, 336, 338) Untersystem zur Vor-Ort-Reinigung (CIP) sind, wobei die Reinigungszeit für jedes CIP-Untersystem einzeln eingestellt wird.

9. Flüssigkeitsbehandlungssystem nach einem der vorhergehenden Ansprüche, wobei die sekundären Untersysteme (234, 236, 238, 334, 336, 338) Untersysteme zur Vor-Ort-Reinigung (CIP) sind, wobei jedes CIP-Untersystem zum Reinigen seines entsprechenden Untersystems (216, 222, 224, 316, 322, 324) konfiguriert ist, durch, in einem ersten Schritt, Spülen des Untersystems (216, 222, 224, 316, 322, 324) mit klarem Wasser, in einem zweiten Schritt, Pumpen einer Reinigungslösung, die Reinigungsmittel umfasst, durch das Untersystem (216, 222, 224, 316, 322, 324), und in einem dritten Schritt, Spülen des Untersystems (216, 222, 224, 316, 322, 324) mit klarem Wasser, sodass die Reinigungsmittel entfernt werden, wobei eine Entscheidung zum Schalten vom ersten Schritt zum zweiten Schritt für jedes CIP-Untersystem (234, 236, 238, 334, 336, 338) einzeln erfolgt.

10. Flüssigkeitsbehandlungssystem nach einem der vorhergehenden Ansprüche, wobei die sekundären Untersysteme (234, 236, 238, 334, 336, 338) Untersysteme zur Vor-Ort-Reinigung (CIP) sind, wobei jedes CIP-Untersystem zum Reinigen seines entsprechenden Untersystems (216, 222, 224, 316, 322, 324) konfiguriert ist, durch, in einem ersten Schritt, Spülen des Untersystems (216, 222, 224, 316, 322, 324) mit klarem Wasser, in einem zweiten Schritt, Pumpen einer Reinigungslösung, die Reinigungsmittel umfasst, durch das Untersystem (216, 222, 224, 316, 322, 324), und in einem dritten Schritt, Spülen des Untersystems (216, 222, 224, 316, 322, 324) mit klarem Wasser, sodass die Reinigungsmittel entfernt werden, wobei eine Entscheidung zum Schalten vom ersten Schritt zum zweiten Schritt für jedes CIP-Untersystem (234, 236, 238, 334, 336, 338) einzeln erfolgt.

11. Verfahren zum Erfassen von Unwirksamkeiten in einem Flüssigkeitsbehandlungssystem, wobei das Flüssigkeitsbehandlungssystem eine Anzahl sekundärer Untersysteme (234, 236, 238, 334, 336, 338) umfasst, die mit Untersystemen (216, 222, 224, 316, 322, 324) des Flüssigkeitsbehandlungssystems verbunden werden kann, wobei jedes sekundäre Untersystem (234, 236, 238, 334, 336, 338) eine zugehörige Messvorrichtung aufweist,
wobei das Verfahren umfasst:
durch Verwenden der Messvorrichtung, Messen von Produktverlusten oder Wasserverbrauch für ein sekundäres Untersystem (234, 236, 238, 334, 336, 338), die durch mindestens ein sekundäres Untersystem (234, 236, 238, 334, 336, 338) verursacht werden, das mit einem entsprechenden Untersystem (216, 222, 224, 316, 322, 324) des Flüssigkeitsbehandlungssystem (200) verbunden ist, und
Vergleichen der Produktverluste oder des Wasserverbrauchs mit Referenzdaten.

12. Verfahren nach Anspruch 11, ferner umfassend das Senden eines Warnhinweises, wenn die Produktverluste oder der Wasserverbrauch von den Referenzdaten abweichen.

13. Verfahren nach einem der Ansprüche 11 oder 12, ferner umfassend das Vergleichen der Produktverluste oder des Wasserverbrauchs von Verlaufsdaten und Senden eines Warnhinweises, wenn die Produktverluste oder der Wasserverbrauch von den Verlaufsdaten abweichen.

14. Verfahren nach einem der Ansprüche 11 bis 13, wobei die sekundären Untersysteme (234, 236, 238, 334, 336, 338) CIP-Untersysteme sind, die ferner umfassen:
Erfassen eines Reinigungsparameters für mindestens eines der CIP-Untersysteme (234, 236, 238, 334, 336, 338) und
Ändern der Einstellungen für das mindestens eine CIP-Untersystem (234, 236, 238, 334, 336, 338) basierend auf dem Reinigungsparameter, sodass die Produktverluste und der Wasserverbrauch minimiert werden können.

15. Verfahren nach einem der Ansprüche 11 bis 14, wobei die sekundären Untersysteme (234, 236, 238, 334, 336, 338) CIP-Untersysteme sind, wobei das CIP-Untersystem (234, 236, 238, 334, 336, 338) zum Reinigen seines entsprechenden Untersystems (216, 222, 224, 316, 322, 324) konfiguriert ist, durch, in einem ersten Schritt, Spülen des Untersystems (216, 222, 224, 316, 322, 324) mit klarem Wasser, in einem zweiten Schritt, Pumpen einer Reinigungslösung, die Reinigungsmittel umfasst, durch das Untersystem (216, 222, 224, 316, 322, 324), und in einem dritten Schritt, Spülen des Untersystems (216, 222, 224, 316, 322, 324) mit klarem Wasser, sodass die Reinigungsmittel entfernt werden, wobei eine Entscheidung zum Schalten vom ersten Schritt zum zweiten Schritt für jedes CIP-Untersystem (234, 236, 238, 334, 336, 338) einzeln erfolgt.

16. Verfahren nach einem der Ansprüche 11 bis 15, wobei die sekundären Untersysteme (234, 236, 238, 334, 336, 338) CIP-Untersysteme sind, wobei das CIP-Untersystem (234, 236, 238, 334, 336, 338) zum Reinigen seines entsprechenden Untersystems (216, 222, 224, 316, 322, 324) konfiguriert ist, durch, in einem ersten Schritt, Spülen des Untersystems (216, 222, 224, 316, 322, 324) mit klarem Wasser, in einem zweiten Schritt, Pumpen einer Reinigungslösung, die Reinigungsmittel umfasst, durch das Untersystem (216, 222, 224, 316, 322, 324), und in einem dritten Schritt, Spülen des Untersystems (216, 222, 224, 316, 322, 324) mit klarem Wasser, sodass die Reinigungsmittel entfernt werden, wobei eine Entscheidung zum Schalten vom ersten Schritt zum dritten Schritt für jedes CIP-Untersystem (234, 236, 238, 334, 336, 338) einzeln erfolgt.

## Revendications

1. Système de traitement de liquide comprenant :
un nombre de sous-systèmes (204, 206, 208, 304, 306, 308) manipulant un produit liquide, ledit produit liquide étant transféré entre lesdits sous-systèmes (204, 206, 208, 304, 306, 308) pendant le traitement dudit produit liquide;
**caractérisé par** :
un nombre de sous-systèmes secondaires (234, 236, 238, 334, 336, 338) pouvant être connectés auxdits sous-systèmes (204, 206, 208, 304, 306, 308) respectivement, chaque sous-système secondaire (234, 236, 238, 334, 336, 338) ayant un dispositif de mesure (216, 222, 224, 316, 322, 324) associé, de telle sorte que les pertes de produit ou la consommation d'eau, provoquées par au moins un sous-système secondaire (234, 236, 238, 334, 336, 338) soient connectées à un sous-système (216, 222, 224, 316, 322, 324) correspondant du système de traitement de liquide (200), puissent être mesurées pour chaque sous-système secondaire (234, 236, 238, 334, 336, 338) individuellement.

2. Système de traitement de liquide selon la revendication 1, dans lequel ledit nombre de sous-systèmes (216, 222, 224, 316, 322, 324) manipulent le produit liquide dans un ordre consécutif et dans lequel ledit nombre de sous-systèmes secondaires (234, 236, 238, 334, 336, 338) sont connectés auxdits sous-systèmes (216, 222, 224, 316, 322, 324).

3. Système de traitement de liquide selon la revendication 1 ou 2, dans lequel chaque sous-système secondaire (234, 236, 238, 334, 336, 338) comprend un orifice d'admission et un orifice de sortie.

4. Système de traitement de liquide selon l'une quelconque des revendications précédentes, comprenant en outre un dispositif de commande agencé pour commander au moins un desdits sous-systèmes secondaires (234, 236, 238, 334, 336, 338) de telle sorte que les pertes de produit et la consommation d'eau puissent être minimisées pour ledit au moins un sous-système parmi lesdits sous-systèmes secondaires (234, 236, 238, 334, 336, 338).

5. Système de traitement de liquide selon l'une quelconque des revendications précédentes, comprenant en outre une base de données comprenant des données de référence pour la consommation d'eau et des pertes de produit pour au moins un sous-système parmi ledit nombre de sous-systèmes secondaires (234, 236, 238, 334, 336, 338) de telle sorte qu'une notification puisse être envoyée si des données réelles diffèrent desdites données de référence.

6. Système de traitement de liquide selon l'une quelconque des revendications précédentes, comprenant en outre une base de données comprenant des données d'historique pour la consommation d'eau et les pertes de produit pour au moins un desdits sous-systèmes parmi le nombre de sous-systèmes secondaires (234, 236, 238, 334, 336, 338) de telle sorte qu'une notification puisse être envoyée si les données réelles diffèrent desdites données d'historique.

7. Système de traitement de liquide selon la revendication 4, dans lequel lesdits sous-systèmes secondaires (234, 236, 238, 334, 336, 338) sont des sous-systèmes de nettoyage en recirculation (CIP), comprenant en outre un dispositif de surveillance agencé pour enregistrer un paramètre de nettoyage et pour envoyer ledit paramètre de nettoyage audit dispositif de commande.

8. Système de traitement de liquide selon l'une quelconque des revendications précédentes, dans lequel lesdits sous-systèmes secondaires (234, 236, 238, 334, 336, 338) sont des sous-systèmes de nettoyage en recirculation (CIP), dans lequel le moment de nettoyage est défini pour chaque sous-système CIP individuellement.

9. Système de traitement de liquide selon l'une quelconque des revendications précédentes, dans lequel lesdits sous-systèmes secondaires (234, 236, 238, 334, 336, 338) sont des sous-systèmes de nettoyage en recirculation (CIP), dans lequel chaque sous-système CIP est configuré pour nettoyer son sous-système (216, 222, 224, 316, 322, 324) correspondant en rinçant, lors d'une première étape, ledit sous-système (216, 222, 224, 316, 322, 324) avec de l'eau propre, en pompant, lors d'une seconde étape, une solution nettoyante comprenant des agents de nettoyage à travers ledit sous-système (216, 222, 224, 316, 322, 324) et, lors d'une troisième étape, en rinçant ledit sous-système (216, 222, 224, 316, 322, 324) avec de l'eau propre de façon à retirer les agents de nettoyage, dans lequel une décision de passer de ladite première étape à ladite seconde étape est prise pour chaque sous-système CIP (234, 236, 238, 334, 336, 338) individuellement.

10. Système de traitement de liquide selon l'une quelconque des revendications précédentes, dans lequel lesdits sous-systèmes secondaires (234, 236, 238, 334, 336, 338) sont des sous-systèmes de nettoyage en recirculation (CIP), dans lequel chaque sous-système CIP est configuré pour nettoyer son sous-système (216, 222, 224, 316, 322, 324) correspondant en rinçant, lors d'une première étape, ledit sous-système (216, 222, 224, 316, 322, 324) avec de l'eau propre, en pompant, lors d'une seconde étape, une solution nettoyante comprenant des agents de nettoyage à travers ledit sous-système (216, 222, 224, 316, 322, 324) et en rinçant, lors d'une troisième étape, ledit sous-système (216, 222, 224, 316, 322, 324) avec de l'eau propre de façon à retirer les agents de nettoyage, dans lequel une décision de passer de ladite seconde étape à ladite troisième étape est prise pour chaque sous-système CIP (234, 236, 238, 334, 336, 338) individuellement.

11. Procédé de détection de gaspillages dans un système de traitement de liquide, ledit système de traitement de liquide comprend un nombre de sous-systèmes secondaires (234, 236, 238, 334, 336, 338) pouvant être connectés aux sous-systèmes (216, 222, 224, 316, 322, 324) dudit système de traitement de liquide, chaque sous-système secondaire (234, 236, 238, 334, 336, 338) ayant un dispositif de mesure associé, ledit procédé comprenant :
la mesure des pertes de produit ou de la consommation d'eau pour un sous-système secondaire (234, 236, 238, 334, 336, 338), provoquée par le fait qu'au moins un sous-système secondaire (234, 236, 238, 334, 336, 338) est connecté à un sous-système (216, 222, 224, 316, 322, 324) correspondant du système de traitement de liquide (200), à l'aide dudit dispositif de mesure; et la comparaison desdites pertes de produit ou de la consommation d'eau aux données de référence.

12. Procédé selon la revendication 11, comprenant en outre l'envoi d'une alerte si lesdites pertes de produit ou ladite consommation d'eau diffèrent desdites données de référence.

13. Procédé selon l'une quelconque des revendications 11 ou 12, comprenant en outre :
la comparaison desdites pertes de produit ou de ladite consommation d'eau aux données d'historique; et
l'envoi d'une alerte si lesdites pertes de produit ou ladite consommation d'eau diffèrent desdites données d'historique.

14. Procédé selon l'une quelconque des revendications 11 à 13, dans lequel lesdits sous-systèmes secondaires (234, 236, 238, 334, 336, 338) sont des sous-systèmes CIP, comprenant en outre :
l'enregistrement d'un paramètre de nettoyage pour au moins un desdits sous-systèmes CIP (234, 236, 238, 334, 336, 338) ; et
la modification des paramètres pour ledit au moins un sous-système CIP (234, 236, 238, 334, 336, 338) sur la base dudit paramètre de nettoyage de façon à pouvoir minimiser les pertes de produit et la consommation d'eau.

15. Procédé selon l'une quelconque des revendications 11 à 14, dans lequel lesdits sous-systèmes secondaires (234, 236, 238, 334, 336, 338) sont des sous-systèmes CIP, dans lequel ledit sous-système CIP (234, 236, 238, 334, 336, 338) est configuré pour nettoyer son sous-système (216, 222, 224, 316, 322, 324) correspondant en rinçant, lors d'une première étape, ledit sous-système (216, 222, 224, 316, 322, 324) avec de l'eau propre, en pompant, lors d'une seconde étape, une solution nettoyante comprenant des agents de nettoyage à travers ledit sous-système (216, 222, 224, 316, 322, 324) et en rinçant, lors d'une troisième étape, ledit sous-système (216, 222, 224, 316, 322, 324) avec de l'eau propre de façon à retirer les agents de nettoyage, dans lequel une décision de passer de ladite première étape à ladite seconde étape est prise pour ledit sous-système CIP (234, 236, 238, 334, 336, 338) individuellement.

16. Procédé selon l'une quelconque des revendications 11 à 15, dans lequel lesdits sous-systèmes secondaires (234, 236, 238, 334, 336, 338) sont des sous-systèmes CIP, dans lequel ledit sous-système CIP (234, 236, 238, 334, 336, 338) est configuré pour nettoyer son sous-système (216, 222, 224, 316, 322, 324) correspondant en rinçant, lors d'une première étape, ledit sous-système (216, 222, 224, 316, 322, 324) avec de l'eau propre, en pompant, lors d'une seconde étape, une solution nettoyante comprenant des agents de nettoyage à travers ledit sous-système (216, 222, 224, 316, 322, 324) et en rinçant, lors d'une troisième étape, ledit sous-système (216, 222, 224, 316, 322, 324) avec de l'eau propre de façon à retirer les agents de nettoyage, dans lequel une décision de passer de ladite seconde étape à ladite troisième étape est prise pour ledit sous-système CIP (234, 236, 238, 334, 336, 338) individuellement.
